**Europäisches Patentamt**

**European Patent Office**

**Office européen des brevets**

(19)

(11) Publication number : **0 336 644 B1**

(12)

# EUROPEAN PATENT SPECIFICATION

(45) Date of publication of patent specification :
**14.10.92 Bulletin 92/42**

(51) Int. CI.⁵ : **F22B 31/00, F22B 37/20**

(21) Application number : **89303151.8**

(22) Date of filing : **30.03.89**

(54) **Fluidised bed boilers.**

(30) Priority : **05.04.88 US 177740**

(43) Date of publication of application :
**11.10.89 Bulletin 89/41**

(45) Publication of the grant of the patent :
**14.10.92 Bulletin 92/42**

(84) Designated Contracting States :
**DE ES GB IT SE**

(56) References cited :
**US-A- 4 444 154**
**US-A- 4 753 197**

(73) Proprietor : **THE BABCOCK & WILCOX COMPANY**
**1010 Common Street, P.O. Box 60035**
**New Orleans, Louisiana 70160 (US)**

(72) Inventor : **McDonald, Dennis K.**
**7584 Wellsley Street, NW**
**Massillon Ohio 44646 (US)**
Inventor : **Weitzel, Paul S.**
**8946 Fairpark**
**Canal Fulton Ohio 44614 (US)**

(74) Representative : **Purvis, William Michael Cameron et al**
**D. Young & Co. 10 Staple Inn**
**London WC1V 7RD (GB)**

EP 0 336 644 B1

## Description

The invention relates to fluidized bed boilers having wall means defining a fluidized bed region and a freeboard region above the fluidized bed region, with a support structure attached to in-bed heat exchanger tubes.

Various systems have been developed to support heat exchangers in a fluidized bed boiler, including stringer support tubes to hang the heat exchanger and mechanical supports by which the heat exchanger is bottom supported. The use of vertical support tubes for hanging horizontally extending heat exchanger tubes is known, for example, from Patent Specifications US-A-2 893 698 to Nunninghoff and US-A-4 356 795 to Loiez et al. The use of tube columns which rise from the floor of a fluidized bed to support a heat exchanger is disclosed in Patent Specification US-A-4 466 385 to Waryasz.

Patent Specification US-A-4 444 154 to Weber discloses a fluidized bed boiler having horizontal heat exchanger tubes which are supported on vertical, cooled support tubes extending from and supported by the floor of the boiler. The pre-characterising portion of claim 1 is based on Patent Specification US-A-4 444 154. Heat exchanger tubes which are supported by their headers are disclosed in Patent Specifications US-A-4 553 502 to Dreuilhe et al and US-A-4 589 618 to Fournier.

Patent Specification US-A-3 929 189 to Lecon shows the use of vertical bars for supporting heat exchanger tubes and Patent Specification US-A-4 100 889 to Chayes shows horizontally extending heat exchanger tubes clamped to vertical support tubes.

According to the invention there is provided a fluidized bed boiler having wall means defining a fluidized bed region and a freeboard region above the fluidized bed region, with a support structure attached to in-bed heat exchanger tubes, characterised in that the wall means includes tubular means disposed near a transition zone between the fluidized bed region and the freeboard region, the support structure comprising a plurality of support tubes having opposite ends extending respectively through the wall means and over the tubular means to be supported thereby, each support tube having at least one upright portion disposed in the fluidized bed region, and support means securing at least one heat exchanger tube to the upright portion.

Thus the support tubes can be fluid-cooled and can extend over and be supported by intermediate headers of the fluid-cooled furnace walls of a fluidized bed boiler. In the case of fluidized bed boilers having furnace walls which are not fluid-cooled, the intermediate headers can be replaced by tubular support members such as pipes.

The fluid-cooled support tubes extend into the fluidized bed region of the boiler below the freeboard region to support a heat exchanger formed by the heat exchanger tubes and disposed in the fluidized bed. The heat exchanger may be formed of horizontally oriented tubes, and the support means may comprise clamps or other known devices which will accommodate relative movement between the support tubes and the heat exchanger tubes resulting from the difference in the temperatures of the fluids passing therethrough.

The heat exchanger tubes can thus be supported via the support tubes by the intermediate wall headers which are in turn supported by the furnace walls and their supports. This support system allows the positioning of the heat exchanger in the fluidized bed while removing the support tubes from the gas stream. The passing of the support tubes over the intermediate wall headers can transfer the load to the furnace walls in a simple and efficient manner, and can avoid extending the fluid-cooled support tubes further into the freeboard region thereby allowing the combustion gas temperature to be maintained at a high level. The use of fluid-cooled support tubes is also preferred to mechanical supports since operating conditions of the former can be more reliably predicted.

Preferably the upright portion of each support tube is inclined inwardly from the wall means from top to bottom.

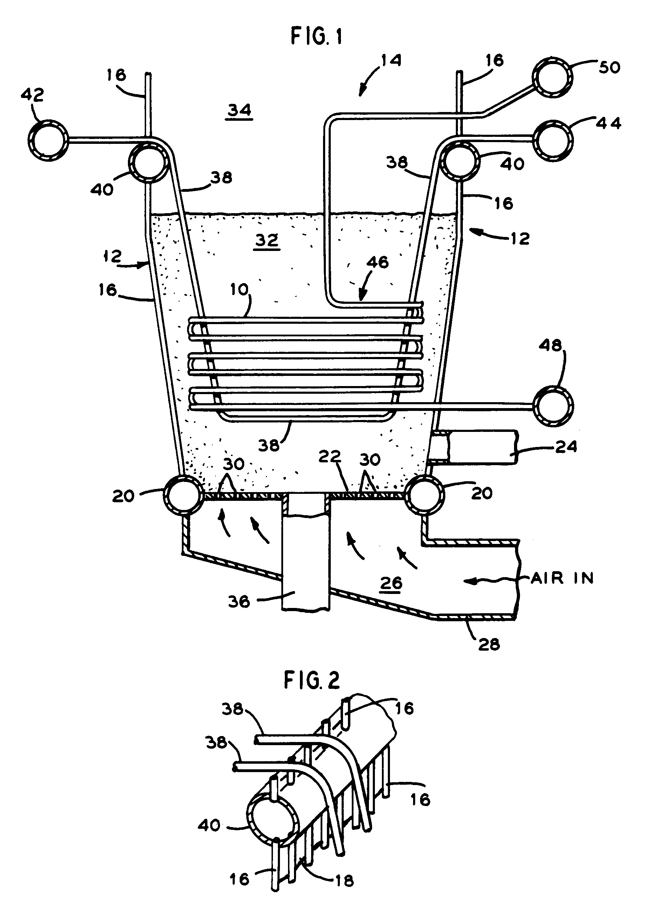

Figure 1 is a schematic side elevation view, partly in section, of a support structure for in-bed heat exchanger tubes of a fluidized bed boiler according to the invention; and

Figure 2 is a fragmentary perspective view of fluid-cooled support tubes of the support structure as they extend over and are supported by an intermediate wall header of the furnace of the fluidized bed boiler.

Referring to the drawings, a support structure is provided for horizontal heat exchanger tubes 10 of a fluidized bed boiler having upright boundary walls including side walls 12 and defining a furnace 14. The side walls 12 are formed by upwardly extending parallel tubes 16 disposed to provide an upflow fluid path and having their intertube spacing closed by metallic webs 18 welded to adjacent tubes to provide a gastight construction. The lower ends of the tubes 16 are connected to furnace inlet headers 20.

A bed support plate 22 extends across the bottom of the furnace 14. Particulate fuel such as coal and particulate sulphur absorbent are supplied through a feed line 24 atop the bed support plate 22. Combustion air is supplied to an air plenum 26 located beneath the bed support plate 22 through an inlet duct 28. The combustion air passes upwardly from the air plenum 26 through a plurality of air ports 30 in the bed support plate 22 at a rate sufficient to fluidize the particulate material atop the bed support plate 22 to establish a fluidized bed 32 superadjacent to the bed support plate 22. The particulate fuel reacts with the combustion air within the fluidized bed 32 and the freeboard region 34 thereabove to form hot gases which pass through the furnace 14 and across steam generating and heating tubes, not shown.

In order to avoid accumulation of particulate material within the fluidized bed 32 as new particulate fuel and unreacted particulate sulphur absorbent are supplied to the fluidized bed 32 through the feed line 24, it is necessary continuously or periodically to withdraw a portion of the bed material, including any ash remaining from combustion of the particulate fuel and sulphated absorbent material. To this end, particulate material from the fluidized bed 32 passes by gravity through a bed drain pipe 36 for transfer through an appropriate valving system to a conveying means, such as a mechanical screw or a pneumatic system, not shown, for transport for recycle or disposal.

A plurality of support tubes 38 are spaced across and pass through the furnace side walls 12 and extend over and are supported by intermediate wall headers 40. The support tubes 38 are connected to inlet and outlet headers 42 and 44, respectively, and are generally a part of the fluid heating circuity of the fluidized bed boiler. The intermediate wall headers 40 are located near the upper surface of the fluidized bed 32, therefore only a relatively short length of each of the support tubes 38 extends into the freeboard region 34. This avoids an undesirable cooling of the gases which pass through the furnace 14.

A heat exchanger 46 is disposed in the fluidized bed 32. The heat exchanger 46 comprises the horizontally oriented return bend tubes 10 connected to inlet and outlet headers 48 and 50, respectively. The tubes 10 can be secured to the support tubes 38 by clamps, not shown, or other known devices which will accommodate relative movement between the support and heat exchanger tubes 38 and 10, respectively, resulting from the difference in the temperatures of the fluids passing therethrough. The weight of the exchanger 46 is thus transferred by the support tubes 38 to the intermediate wall headers 40 which are supported, in turn, by the side walls 12.

## Claims

1. A fluidized bed boiler having wall means (12) defining a fluidized bed region (32) and a freeboard region (34) above the fluidized bed region (32), with a support structure attached to in-bed heat exchanger tubes, characterised in that the wall means (12) includes tubular means (40) disposed near a transition zone between the fluidized bed (32) region and the freeboard (34) region, the support structure comprising a plurality of support tubes (38) having opposite ends extending respectively through the wall means (12) and over the tubular means (40) to be supported thereby, each support tube (38) having at least one upright portion disposed in the fluidized bed region (32), and support means securing at least one heat exchanger tube (10) to the upright portion.

2. A fluidized bed boiler according to claim 1, wherein the upright portion of the support structure is inclined inwardly from the wall means (12) from top to bottom.

## Patentansprüche

1. Wirbelschichtbehälter mit Wandungsmitteln (12) zur Bildung eines Wirbelschichtbereiches (32) und eines Freiraumbereiches (34) über dem Wirbelschichtbereich (32), mit einem an in der Wirbelschicht angeordneten Wärmetauscherrohren befestigten Stützaufbau, dadurch gekennzeichnet, daß das Wandungsmittel (12) rohrförmige Mittel (40) aufweist, die nahe einer Übergangszone zwischen dem Wirbelschichtbereich (32) und dem Freiraumbereich (34) angeordnet sind, der Stützaufbau eine Vielzahl von Stützrohren (38) aufweist, deren gegenüberliegende Enden sich jeweils durch das Wandungsmittel (12) und über das rohrförmige Mittel (40) erstrecken, um dadurch gestützt zu werden, jedes Stützrohr (38) mindestens ein senkrechtes Teil hat, welches in dem Wirbelschichtbereich (32) angeordnet ist, und daß Stützmittel mindestens ein Wärmetauscherrohr (10) an dem senkrechten Teil befestigen.

2. Wirbelschichtbehälter nach Anspruch 1, wobei das senkrechte Teil des Stützaufbaues von dem Wandungsmittel (12) von oben zum Boden einwärts geneigt ist.

## Revendications

1. Chaudière à lit fluidisé comportant des parois (12) formant une région à lit fluidisé (32) et une région de franc-bord (34) au-dessus de la région à lit fluidisé (32), avec une structure de support fixée à des tubes échangeurs de chaleur immergés dans le lit, caractérisée en ce que les parois (12) comprennent des moyens tubulaires (40) disposés près d'une zone de transition entre la région à lit fluidisé (32) et la région de franc-bord (34), la structure de support comprenant une pluralité de tubes de support (38) comportant des extrémités opposées s'étendant respectivement à travers les parois (12) et sur les moyens tubulaires (40) qu'ils doivent supporter, chaque tube de support (38) comportant au moins une portion verticale disposée dans la région à lit fluidisé (32), et des moyens de support fixant au moins un tube échangeur de chaleur (10) à la portion verticale.

2. Chaudière à lit fluidisé selon la revendication 1, dans laquelle la portion verticale de la structure de support est inclinée vers l'intérieur depuis les parois (12) du haut en bas.

FIG. 1

FIG. 2